# DEMANDE DE BREVET EUROPEEN

(11) **EP 1 398 561 A1**
(43) Date de publication de la demande: **17.03.2004**
(21) Numéro de dépôt: 03292011.8
(22) Date de dépôt: 11.08.2003
(51) Int. Cl.: F16L 59/02

(54) **Ecarteur destiné à être mis en place sur un élément tubulaire**

(30) Priorité: 21.08.2002 FR 0210442
(71) Demandeur: Gremco S.A., 93400 Saint Ouen (FR)
(72) Inventeur: Lancien, Jean-Claude, 60620 Cuvergnon (FR)
(74) Mandataire: Jaunez, Xavier

(57) **Abrégé**

L'invention concerne un écarteur destiné à être mis en place sur un élément tubulaire.

Conformément à l'invention, l'écarteur (10) comporte d'une part un manchon (12) en matériau alvéolaire à haute compressibilité, ledit manchon présentant une large fente (13) s'étendant sur toute sa longueur, et délimitant un passage central (15) essentiellement cylindrique dont le diamètre est supérieur au diamètre nominal de l'élément tubulaire concerné, et d'autre part une gaine (11) en matière plastique thermorétractable entourant le manchon fendu (12) au moins jusqu'aux bords d'extrémité de celui-ci. La gaine (11) est partiellement rétractée sur le manchon fendu (12) de façon à maintenir ledit manchon à l'état ouvert pour la mise en place de l'écarteur (10) sur l'élément tubulaire concerné, et d'autre part à pouvoir être ensuite thermorétractée pour resserrer ledit manchon fendu et fixer en position ledit écarteur.

## Description

### DOMAINE DE L'INVENTION

La présente invention concerne un écarteur destiné à être mis en place sur un élément tubulaire.

### ARRIERE-PLAN DE L'INVENTION

Dans les structures motorisées ou vibrantes, on utilise fréquemment des éléments mis en place sur des tubes ou des canalisations afin de maintenir lesdits tubes ou lesdites canalisations hors d'un contact avec une paroi avoisinante ou avec un autre tube ou une autre canalisation avoisinante. De tels éléments sont classiquement dénommés « écarteurs ».

Dans le domaine de l'industrie automobile, on utilise en particulier fréquemment des écarteurs mis en place sur une canalisation tubulaire souple ou semi-rigide, afin d'éviter le contact de cette canalisation tubulaire avec une surface adjacente, par exemple la surface interne du capot du véhicule, ou avec une surface dont la température est élevée, ou encore en vue d'éviter un contact susceptible de générer des cognements ou des bruits indésirables.

Lorsqu'il n'est pas possible d'enfiler l'écarteur sur l'élément tubulaire concerné, on utilise alors pour assurer cette fonction des éléments clipsables, par exemple réalisés sous la forme d'un étrier en forme de C. Cependant, de tels éléments clipsables induisent des problèmes dimensionnels dans la mesure où il faut disposer d'éléments propres à chaque tuyau ou canalisation, ce qui implique à chaque fois un outillage de moulage particulier. En outre, les éléments moulés s'avèrent en général relativement durs, de sorte que le contact avec une surface vibrante est fréquemment générateur de cognements ou autres bruits indésirables.

Lorsqu'il est possible d'enfiler l'écarteur sur l'élément tubulaire concerné, on utilise alors en général une bague dont il faut assurer la tenue en place dans la position adéquate sur l'élément tubulaire. Ceci est assuré soit par un collage, soit par l'utilisation d'un collier de serrage rapporté, mais dans tous les cas ceci suppose une opération supplémentaire ou un composant supplémentaire susceptible d'usure ou de corrosion.

L'état de la technique le plus proche est illustré par le document DE-B-1 475 841 qui décrit un écarteur constitué par deux demi-manchons complémentaires en matériau alvéolaire, et une ceinture de liaison en matériau thermorétractable qui est fermée par une liaison encliquetée. La rétraction de la ceinture comprime les deux demi-manchons et fixe l'écarteur en position sur le tube sur lequel il est enfilé. Il est à noter que les bords des deux demi-manchons sont jointifs lorsque la bande n'est pas rétractée, de sorte que le processus de serrage se fait par écrasement partiel des deux demi-manchons. De plus, la présence d'organes de liaison à encliquetage sur les deux bords axiaux de la ceinture, lesquels organes sont nécessairement rigides pour que la liaison d'encliquetage résiste lors de la rétraction de ladite ceinture, constitue un inconvénient pratique important.

Le DE-A-23 12 417 décrit la pose d'une gaine thermorétractable sur un manchon en fibres qui est enroulé hélicoïdalement pour former un cylindre, suivie d'une rétraction de la gaine pour serrer le manchon sur un mandrin de maintien. Il est à noter qu'il ne s'agit pas d'un écarteur enfilé sur un tube.

Le US-A-4 915 425 illustre l'utilisation d'une gaine thermorétractable pour maintenir en position un manchon sur un tube annelé, la rétraction de la partie dépassante permettant d'envelopper une annelure pour verrouiller le manchon. Il est à noter que le tronçon de gaine thermorétractable ne concerne que l'extrémité du manchon.

Le DE-A-36 35 515 illustre une canalisation utilisant un manchon d'isolation thermique en mousse de polyuréthane à pores fermés.

### OBJET DE L'INVENTION

La présente invention a pour but de concevoir un écarteur du type enfilable sur un élément tubulaire, agencé pour pouvoir être aisément et rapidement mis en place dans la position adéquate sur ledit élément tubulaire.

### DEFINITION GENERALE DE L'INVENTION

L'invention a ainsi pour objet un écarteur destiné à être mis en place sur un élément tubulaire, dont la structure permet un maintien en position à la fois aisé et fiable, et ce quels que soient la nature de l'élément tubulaire et/ou le profil de surface dudit élément tubulaire.

Ce problème est résolu conformément à l'invention, grâce à un écarteur comportant d'une part un manchon en matériau alvéolaire à haute compressibilité, ledit manchon présentant une large fente s'étendant sur toute sa longueur, et délimitant un passage central essentiellement cylindrique dont le diamètre est supérieur au diamètre nominal de l'élément tubulaire, et d'autre part une gaine en matière plastique thermorétractable entourant le manchon fendu au moins jusqu'aux bords d'extrémité de celui-ci, ladite gaine étant partiellement rétractée sur le manchon fendu de façon d'une part à maintenir ledit manchon fendu à l'état ouvert pour la mise en place de l'écarteur sur l'élément tubulaire, et d'autre part à pouvoir être ensuite thermorétractée pour resserrer ledit manchon fendu et fixer en position ledit écarteur.

Une telle structure d'écarteur permet une mise en place et une fixation en position sur des types très variables d'éléments tubulaires, tant par leur nature que leur profil de surface.

Le manchon en matériau alvéolaire peut présenter une fente s'étendant axialement, ou en variante une fente s'étendant obliquement ou hélicoïdalement. Dans tous les cas, la largeur de la fente devra être suffisante pour générer, par l'ouverture dudit manchon fendu, une augmentation de diamètre substantielle facilitant la mise en place de l'écarteur sur l'élément tubulaire.

On pourra prévoir que la gaine partiellement rétractée s'arrête au niveau des bords d'extrémité du manchon fendu, ou encore enveloppe au moins partiellement les bords d'extrémité dudit manchon fendu.

Dans ce dernier cas, on pourra prévoir que la gaine se prolonge au-delà de l'un au moins des bords d'extrémité du manchon fendu, en formant une lèvre cylindrique dont le diamètre intérieur est supérieur au diamètre nominal de l'élément tubulaire, ladite lèvre cylindrique prolongeant la gaine pouvant en outre participer à la fixation en positon de l'écarteur, en complément de l'effet de serrage déjà obtenu par la rétraction, grâce à un adhésif prévu sur la face interne de ladite lèvre.

Avantageusement encore, la gaine présente extérieurement un marquage et/ou une couleur d'identification.

De préférence enfin, le manchon fendu sera réalisé en mousse alvéolaire à cellules fermées, et la gaine sera réalisée en matière plastique à la fois thermorétractable et apte à assurer une protection mécanique et/ou chimique du manchon fendu.

D'autres caractéristiques et avantages de l'invention apparaîtront plus clairement à la lumière de la description qui va suivre et du dessin annexé, concernant un mode de réalisation particulier.

### BREVE DESCRIPTION DES DESSINS

Il sera fait référence aux figures où :
- la figure 1 illustre en perspective un écarteur conforme à l'invention, dont la gaine, partiellement rétractée, enveloppe partiellement les bords d'extrémité du manchon fendu en matériau alvéolaire ;
- la figure 2 est une coupe selon II-II de la figure 1, permettant de mieux distinguer la structure de l'écarteur ;
- la figure 3 est une coupe selon III-III de la figure 2, permettant de mieux distinguer la large fente du manchon intérieur ouvert ;
- la figure 4 illustre en perspective la mise en place de l'écarteur précité sur un élément tubulaire ;
- la figure 5, et la figure 6 qui en est la coupe selon VI-VI, illustrent l'écarteur mis en place au niveau de la position prévue sur l'élément tubulaire ;
- la figure 7, et la figure 8 qui en est la coupe selon VIII-VIII, illustrent la fixation en position dudit écarteur par rétraction de sa gaine périphérique, avec un serrage et une fermeture du manchon fendu ;
- la figure 9 illustre en perspective un tronçon de gaine non encore rétracté, et un manchon fendu, avec selon le cas une fente axiale ou hélicoïdale ;
- la figure 10 illustre en coupe axiale différentes variantes correspondant à des longueurs de gaine qui sont respectivement égale, supérieure, et très supérieure à la longueur axiale du manchon fendu, l'écarteur étant représenté dans la position correspondant à la rétraction partielle de la gaine périphérique ;
- la figure 11 illustre en perspective un écarteur correspondant à la variante c) de la figure 10, après rétraction définitive de la gaine de l'écarteur mis en place.

### DESCRIPTION DETAILLEE DES MODES DE REALISATION PREFERES

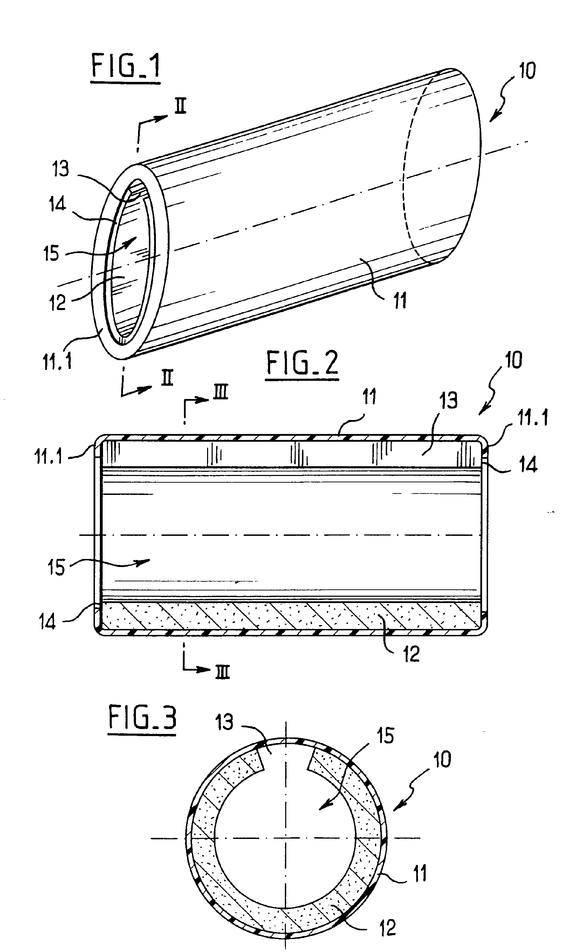

Sur les figures 1 à 3, on distingue un écarteur noté 10, qui est destiné à être mis en place sur un élément tubulaire, lequel élément tubulaire pouvant être un tuyau ou une canalisation de toute nature, et de tout type de profil, adoptant une forme gauche ou non propre à l'utilisation dudit élément tubulaire.

L'écarteur 10 comporte tout d'abord un manchon 12 en matériau alvéolaire à haute compressibilité, ledit manchon présentant une large fente 13 s'étendant sur toute sa longueur, et délimitant un passage central 15 essentiellement cylindrique dont le diamètre est supérieur au diamètre nominal de l'élément tubulaire concerné. L'écarteur 10 comporte d'autre part une gaine 11 en matière plastique thermorétractable entourant le manchon fendu 12 au moins jusqu'aux bords d'extrémité notés 14 de celui-ci.

Les figures 1 à 3 illustrent l'écarteur 10 dans l'état correspondant à la rétraction partielle de la gaine 11 sur le manchon fendu 12, ce qui correspond à l'état dans lequel l'écarteur est stocké avant d'être mis en place et fixé en position sur un élément tubulaire. On aura compris que, dans cet état, la gaine 11 possède encore une aptitude à être rétractée, de façon à diminuer sa dimension circonférentielle, et par suite resserrer le manchon fendu 12 en diminuant la largeur de la fente 13 de celui-ci, laquelle fente peut atteindre la valeur nulle dans le cas où les deux bords axiaux viennent au contact l'un de l'autre après la rétraction définitive de la gaine.

Ainsi, conformément à une caractéristique essentielle de l'invention, la gaine 11 est partiellement rétractée sur le manchon fendu 12 de façon d'une part à maintenir ledit manchon fendu à l'état ouvert pour la mise en place de l'écarteur sur l'élément tubulaire, et d'autre part à pouvoir être ensuite thermorétractée pour resserrer ledit manchon fendu et fixer en position ledit écarteur.

En l'espèce, la gaine 11 partiellement rétractée enveloppe en partie, par ses rabats terminaux 11.1, les bords d'extrémité 14 du manchon fendu 12, mais, comme on le verra par la suite, ceci ne constitue naturellement qu'un mode d'exécution particulier. Ce mode d'exécution présente toutefois l'avantage, grâce aux rabats terminaux de la gaine 11 contre les bords d'extrémité 14, d'assurer le maintien en place du manchon fendu 12, à la façon d'un boîtier de confinement, ce qui protège le manchon fendu 12 et évite la perte dudit manchon lors d'une manipulation de l'écarteur à la mise en place de celui-ci.

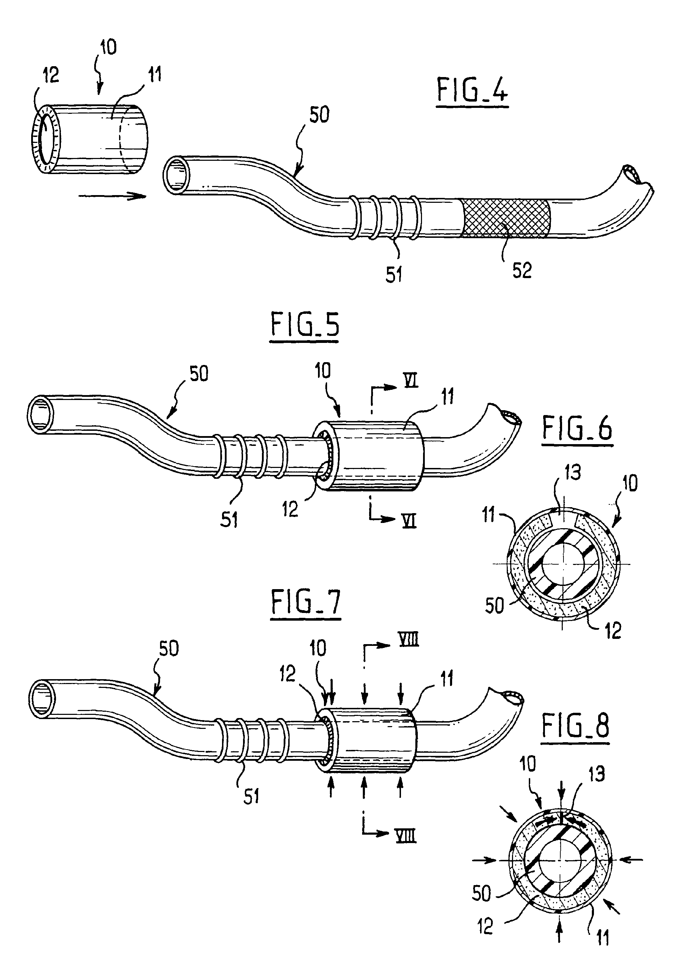

On va maintenant décrire plus en détail la mise en place et la fixation en position de l'écarteur précédemment décrit sur un élément tubulaire, en référence aux figures 4 à 8.

Sur la figure 4, on distingue un élément tubulaire 50 qui est en l'espèce un tuyau souple ou semi-rigide, comportant des parties de surface extérieure lisse, et aussi des annelures 51. On a noté en 52 la position désirée correspondant à l'écarteur 10. L'écarteur 10 est alors enfilé sur l'élément tubulaire 50 par une extrémité de celui-ci, de préférence l'extrémité correspondant au cintrage à plus grand rayon de courbure, afin d'éviter de déformer excessivement l'écarteur, lequel présente toutefois une certaine souplesse de déformation élastique lors de sa mise en place. L'ouverture du manchon fendu 12 permet en particulier aisément d'enjamber des annelures 51 si l'on veut mettre en place l'écarteur 10 dans une zone 52 correspondant à une surface externe lisse. On pourrait naturellement en variante prévoir de mettre en place l'écarteur 10 précisément sur une zone correspondant à ces annelures, ceci ne changeant rien quant à la facilité et la fiabilité de la fixation en position dudit écarteur après rétraction finale de sa gaine périphérique.

Les figures 5 et 6 illustrent l'écarteur 10 mis en place au niveau de la positon désirée, et l'on constate que la fente 13 présente encore une largeur importante correspondant au diamètre maximal du passage central du manchon fendu.

Les figures 7 et 8 illustrent l'écarteur précité après rétraction (symbolisée ici par des flèches radiales) de la gaine périphérique 11, rétraction qui aboutit au resserrement du manchon fendu 12 et à la fixation en position de l'écarteur 10. On constate que la fente 13 est alors réduite à une largeur quasi-nulle, par suite du resserrement complet du manchon fendu 12. On pourra naturellement prévoir des variantes dans lesquelles la fente sera faible mais non nulle, le maintien en position de l'écarteur étant néanmoins parfaitement assuré.

La gaine 11 de l'écarteur 10 assure ainsi plusieurs fonctions, dont la première est d'assurer le maintien du manchon fendu à l'état ouvert, pour favoriser la mise en place de l'écarteur par enfilage sur l'élément tubulaire concerné. La seconde fonction consiste à assurer, par suite de son rétrécissement circonférentiel, le resserrement du manchon fendu, et ainsi la fixation en position de l'écarteur sur l'élément tubulaire dans l'emplacement choisi. On pourra en outre prévoir que la gaine 11 présente extérieurement un marquage et/ou une couleur d'identification, ce qui permet d'assurer une fonction supplémentaire de nature informative (variante non représentée).

Enfin, par le choix particulier de son matériau constitutif et/ou de ses dimensions, on pourra prévoir que la gaine 11 assure également une fonction de protection mécanique et/ou chimique du manchon fendu 12.

Dans la pratique, on utilisera de préférence, pour réaliser le manchon fendu 12, un matériau tel qu'une mousse alvéolaire à cellules fermées. On pourra ainsi utiliser des mousses existantes à base de nitryle, d'EPDM, de butylène, ou encore de caoutchouc synthétique ou de silicone. La gaine 11 sera quant à elle réalisée en toute matière thermorétractable convenant à l'application concernée, en particulier du polyéthylène ou du polychlorure de vinyle.

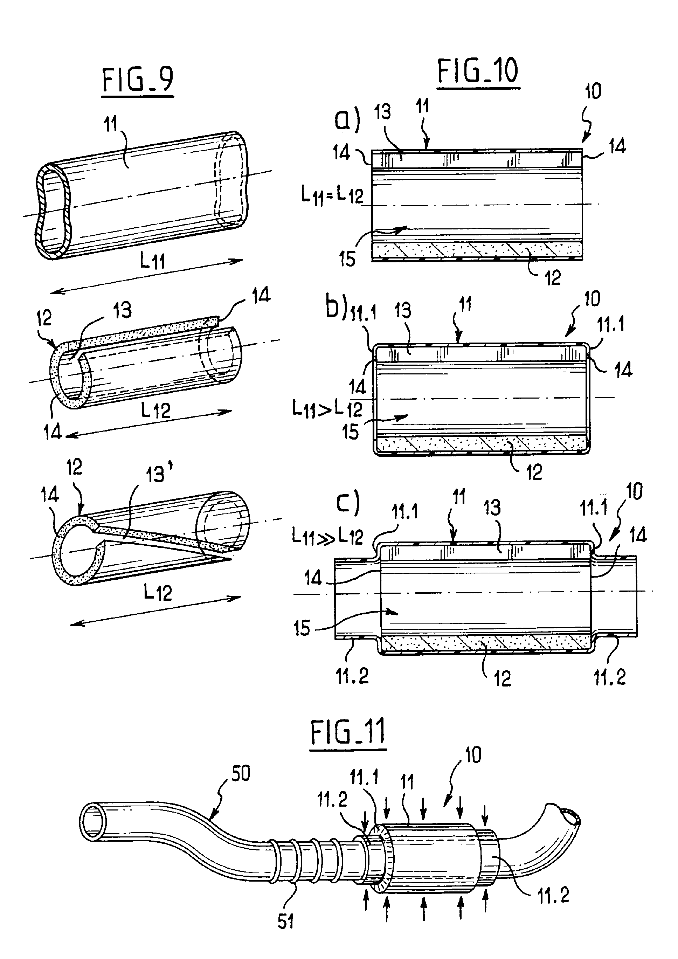

Sur la figure 9, on distingue un tronçon de gaine 11 non encore rétracté, donc à l'état librement cylindrique, dont la longueur axiale est notée L₁₁. On distingue également un manchon fendu 12, dont la longueur axiale est notée L₁₂. Sur cette figure, on a représenté une variante dont la fente 13 s'étend axialement, comme précédemment décrit, ainsi qu'une autre variante correspondant à une fente 13' s'étendant obliquement ou hélicoïdalement.

Comme la gaine 11, à l'état partiellement rétracté, doit entourer le manchon fendu 12 au moins jusqu'aux bords d'extrémité 14 de celui-ci, on a la relation L₁₁ supérieur ou égal à L₁₂.

La figure 10 illustre différentes variantes selon les écarts entre les paramètres L₁₁ et L₁₂ précités.

En a) , on a L₁₁ = L₁₂, de sorte que la gaine 11 partiellement rétractée s'arrête précisément au niveau des bords d'extrémité 14 du manchon fendu 12.

En b) , on a L₁₁ > L₁₂, de sorte que la gaine 11 partiellement rétractée enveloppe au moins partiellement les bords d'extrémité 14 du manchon fendu 12, comme cela était le cas dans le mode d'exécution précédemment décrit. La gaine 11 présente alors des rebords rentrants 11.1 au niveau des bords d'extrémité 14 du manchon fendu 12, et l'on a vu plus haut que ceci permettait d'assurer un maintien en place du manchon fendu 12 qui peut être quelque peu flottant à l'intérieur de son enrobage cylindrique.

En c) , on a la relation L₁₁ >> L₁₂, auquel cas la gaine 11 se prolonge au-delà de l'un au moins des bords d'extrémité 14 du manchon fendu 12, en formant une lèvre cylindrique notée 11.2 dont le diamètre intérieur est supérieur au diamètre nominal de l'élément tubulaire 50 concerné. En l'espèce, on a prévu que la gaine 11 est prolongée au-delà de ses deux bords d'extrémité 14, en formant ainsi de chaque côté du manchon fendu une lèvre cylindrique 11.2. Cette dernière variante permet, en plus du maintien en position du manchon fendu lorsque la gaine est à l'état partiellement rétractée, de disposer d'une ou deux bagues formant collier thermorétractable qui viennent alors ceinturer l'élément tubulaire sur lequel l'écarteur est mis en place. Ces deux bagues se rétractent sur l'élément tubulaire lors de la rétraction de la gaine, ce qui renforce le blocage axial de l'écarteur. Il est possible de renforcer encore la solidité du maintien en position en prévoyant éventuellement un adhésif sur la face interne de la ou de chaque lèvre cylindrique 11.2 prolongeant la gaine 11.

Sur la figure 11, on a illustré l'écarteur 10 correspondant à cette dernière variante, après rétraction finale de la gaine 11, tant dans sa partie centrale entourant le manchon fendu 12, que pour ses deux lèvres cylindriques 11.2.

Dans tous les cas, la rétraction finale de la gaine périphérique de l'écarteur 10, une fois ledit écarteur mis en place, pourra être effectuée par tout moyen classique en la matière, tel que passage dans un four-tunnel ou au voisinage d'un organe chauffeur adéquat.

La mise en place de l'écarteur qui vient d'être décrit, et son maintien en position par rétraction finale de sa gaine périphérique, constituent un processus à la fois simple et très rapide. En outre, la souplesse de la zone périphérique de l'écarteur, qui est encore préservée après la rétraction finale de la gaine dudit écarteur, permet également d'assurer une fonction d'amortissement de bruit en évitant tout risque de cognements ou de vibrations indésirables.

Enfin, le choix des matériaux constitutifs de l'écarteur permet aisément d'obtenir une recyclabilité dudit écarteur lorsque celui-ci est enlevé de son élément tubulaire.

On est ainsi parvenu à réaliser un écarteur dont la structure est à la fois simple et permet une mise en place rapide et fiable sur tout type d'élément tubulaire.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Ecarteur destiné à être mis en place sur un élément tubulaire, **caractérisé en ce qu'**il comporte d'une part un manchon (12) en matériau alvéolaire à haute compressibilité, ledit manchon présentant une large fente (13, 13') s'étendant sur toute sa longueur, et délimitant un passage central (15) essentiellement cylindrique dont le diamètre est supérieur au diamètre nominal de l'élément tubulaire, et d'autre part une gaine (11) en matière plastique thermorétractable entourant le manchon fendu (12) au moins jusqu'aux bords d'extrémité (14) de celui-ci, ladite gaine étant partiellement rétractée sur le manchon fendu (12) de façon d'une part à maintenir ledit manchon fendu à l'état ouvert pour la mise en place de l'écarteur (10) sur l'élément tubulaire, et d'autre part à pouvoir être ensuite thermorétractée pour resserrer ledit manchon fendu et fixer en position ledit écarteur.

2. Ecarteur selon la revendication 1, **caractérisé en ce que** le manchon (12) présente une fente (13) s'étendant axialement.

3. Ecarteur selon la revendication 1, **caractérisé en ce que** le manchon (12) présente une fente (13') s'étendant obliquement ou hélicoïdalement.

4. Ecarteur selon l'une des revendications 1 à 3, **caractérisé en ce que** la gaine (11) partiellement rétractée s'arrête au niveau des bords d'extrémité (14) du manchon fendu (12).

5. Ecarteur selon l'une des revendications 1 à 3, **caractérisé en ce que** la gaine (11) partiellement rétractée enveloppe au moins partiellement les bords d'extrémité (14) du manchon fendu (12).

6. Ecarteur selon la revendication 5, **caractérisé en ce que** la gaine (11) se prolonge au-delà de l'un au moins des bords d'extrémité (14) du manchon fendu (12), en formant une lèvre cylindrique (11.2) dont le diamètre intérieur est supérieur au diamètre nominal de l'élément tubulaire.

7. Ecarteur selon la revendication 6, **caractérisé en ce que** la lèvre cylindrique (11.2) prolongeant la gaine (11) participe à la fixation en position de l'écarteur (10) grâce à un adhésif prévu sur la face interne de ladite lèvre.

8. Ecarteur selon l'une des revendications 1 à 7, **caractérisé en ce que** la gaine (11) présente extérieurement un marquage et/ou une couleur d'identification.

9. Ecarteur selon l'une des revendications 1 à 8, **caractérisé en ce que** le manchon fendu (12) est réalisé en mousse alvéolaire à cellules fermées.

10. Ecarteur selon l'une des revendications 1 à 9, **caractérisé en ce que** la gaine (11) est réalisée en matière plastique à la fois thermorétractable et apte à assurer une protection mécanique et/ou chimique du manchon fendu (12).
